# EUROPEAN PATENT SPECIFICATION

(11) **EP 4 384 807 B1**
(45) Date of publication and mention of the grant of the patent: **28.10.2026**
(21) Application number: 21758783.1
(22) Date of filing: 13.08.2021
(51) Int. Cl.: G01N 21/90

(54) **METHOD FOR DETECTING DEFECTIVE BEVERAGE CANS AND PRODUCTION LINE WITH CORRESPONDING DETECTION**
VERFAHREN ZUR ERKENNUNG DEFEKTER GETRÄNKEDOSEN UND PRODUKTIONSLINIE MIT ENTSPRECHENDER ERKENNUNG
PROCÉDÉ DE DÉTECTION DE CANETTES DE BOISSON DÉFECTUEUSES ET LIGNE DE PRODUCTION AVEC DÉTECTION CORRESPONDANTE

(43) Date of publication of application: 19.06.2024
(73) Proprietor: Canpack S.A., 30-302 Kraków (PL)
(72) Inventor: EVE, Rene, 31-358 Krakow (PL); VISA, Jari, 31-358 Krakow (PL)
(74) Representative: Serravalle, Marco
(86) International application number: PCT/IB2021/057491
(87) International publication number: WO 2023/017305

(56) References cited:
- DE-U1- 20 212 577
- JP-A- 2009 216 720
- JP-A- S60 129 646
- US-A- 4 924 107
- US-A1- 2008 192 471
- US-B1- 6 554 452

## Description

### FIELD OF THE INVENTION

The present technology relates to components and apparatuses for manufacturing beverage cans. More specifically, the present technology relates to image-based techniques for ensuring that each can produced meets quality control standards.

### BACKGROUND OF THE INVENTION

An inner surface of beverage cans is coated with a protective lacquer. This lacquer prevents metallic substances from leeching into the beverage, and also protects the can material from being eaten away from the beverage (which is often quite acidic). If the lacquer is not applied to an entire inner surface of a can, numerous problems may arise. For example, the beverage may react with the metal can material, which may give the beverage a bad taste, odor, and/or make the beverage unhealthy for consumption. Additionally, the beverage may eat through the can body, which may cause leaks. If a beverage leaks onto the outside of nearby cans, the beverage may cause corrosion and/or other damage to the nearby cans, which may lead to further leaks and/or a loss of pressure within cans. As cans are often stored on large pallets, one defective can may cause a chain reaction that ruins the rest of the cans on a pallet. Additionally, leaks may attract flies and other pests and vermin, which may lead to a warehouse being overrun with pests and vermin, which may cause damage to other products.

Current solutions for monitoring the application of lacquer include cameras positioned immediately after the lacquer application station. These cameras image the cans while the lacquer is still wet. Current imaging systems may only detect whether lacquer is present, but cannot detect whether an entire inner surface of the can has been coated. Thus, if a lacquer spray nozzle is emitting lacquer in an uneven manner (such as due to a partial clog), current imaging systems may fail to detect the presence of voids in the lacquer. Therefore, improvements in determining a condition of an interior of a can are desired.

US 6 554 452 B1 discloses an optical inspection system for inspecting the interior of a can being conveyed during manufacturing process, said system comprising a camera cooperating with a light source for capturing an image of the illuminated interior of the inspected can, and an image processor for analyzing the captured image to identify any contaminant within the can.

### BRIEF SUMMARY OF THE INVENTION

The present invention as defined in the independent claims 1 and 5 defines a method of determining a condition of an interior of a can and a production line being adapted to achieve this determination.

Some embodiments of the present technology may encompass methods of determining a condition of an interior of a can. The methods may include illuminating an interior of one can of a plurality of cans on a production line using at least one light source. The methods may include imaging the interior of the one can while the interior is illuminated by the at least one light source. The methods may include determining whether a state of the interior of the one can matches a predetermined state based on an image of the interior of the can.

In some embodiments, the at least one light source may include a first light source that emits light within a first range of wavelengths and a second light source that emits light within a second range of wavelengths. The imaging may include capturing a first image of the interior of the one can while the interior of the one can is illuminated by the first light source. The imaging may include capturing a second image of the interior of the one can while the interior of the one can is illuminated by the second light source. The predetermined state of the interior of the one can may include a uniform surface appearance. Light emitted by the at least one light source may include one or more of ultraviolet light, visible light, and infrared light. The methods may include rejecting the one can upon determining that the state of the interior of the one can does not match the predetermined state. Illuminating an interior of one can and imaging the interior of the one can may be performed while the one can is moving down the production line.

Some embodiments of the present technology may encompass methods of determining a condition of an interior of a can. The methods may include illuminating an interior of one can of a plurality of cans on a production line using a first light source that emits light within a first range of wavelengths. The methods may include capturing a first image of the interior of the one can while the interior is illuminated by the first light source. The methods may include illuminating the interior of the one can using a second light source that emits light within a second range of wavelengths. The methods may include capturing a second image of the interior of the one can while the interior is illuminated by the second light source. The methods may include determining whether a state of the interior of the one can matches a predetermined state based on one or both of the first image and the second image. The methods may include rejecting the one can if the state of the interior of the one can does not match the predetermined state.

In some embodiments, the first range of wavelengths may include ultraviolet light and the second range of wavelengths may include visible light. The first image may be captured by a first camera and the second image may be captured by a second camera. The predetermined state may include a threshold of uniformity within each of the first image and the second image. A mismatch between the state of the interior of the one can and the predetermined state may be indicative of one or both of a presence of an undesired substance or a void in a lacquer coating applied to the interior of the one can. Rejecting the one can may include automatically removing the one can from the production line using a removal mechanism.

Some embodiments of the present technology may encompass production lines. The production lines may include a conveyor mechanism that is configured to transport a plurality of cans down a portion of the production line. The production lines may include a first light source that emits light in a first range of wavelengths at a first position of the conveyor mechanism. The production lines may include a first camera directed toward the first position. The production lines may include a second light source that emits light in a second range of wavelengths at a second position of the conveyor mechanism. The production lines may include a second camera directed toward the second position. The production lines may include one or more processors. The production lines may include a memory. The memory may have instructions stored thereon that, when executed, cause the one or more processors to illuminate an interior of one can of the plurality of cans using the first light source. The instructions may further cause the one or more processors to capture a first image of the interior of the one can using the first camera while the interior of the one can is illuminated by the first light source. The instructions may further cause the one or more processors to illuminate the interior of the one can using the second light source. The instructions may further cause the one or more processors to capture a second image of the interior of the one can using the second camera while the interior of the one can is illuminated by the second light source. The instructions may further cause the one or more processors to determine whether a state of the interior of the one can matches a predetermined state based on the first image and the second image.

In some embodiments, the production lines may include a removal mechanism configured to remove the one can upon determining that the state of the interior of the one can does not match the predetermined state. The first light source may be coupled with the first camera. The second light source may be coupled with the second camera. One of the first range of wavelengths and the second range of wavelengths may include ultraviolet light and the other of the first range of wavelengths and the second range of wavelengths may include visible light. The first position may be positioned upstream of the second position. The first light source and the second light source may be positioned above the conveyor mechanism. The first camera may be positioned to image an additional can of the plurality of cans while the second camera images the one can. The production line may include a necker that is configured to shape a neck of each of the plurality of cans. The conveyor mechanism may be configured to transport the plurality of cans from the necker at least partially to a subsequent station of the production line. The subsequent station may include a palletizer. The production line may include an unloading mechanism that is configured to transfer the plurality of cans from a pallet to the conveyor mechanism. The production line may include a filling station that is configured to receive acceptable cans of the plurality of cans from the conveyor mechanism.

### BRIEF DESCRIPTION OF THE DRAWINGS

A further understanding of the nature and advantages of the disclosed technology may be realized by reference to the remaining portions of the specification and the drawings.
FIG. 1 illustrates a schematic view of a production line 100 for producing beverage cans according to embodiments of the present invention.
FIG. 2 illustrates a schematic partial top plan view of an exemplary production line 200 according to some embodiments of the present technology.
FIG. 2A illustrates a schematic partial side elevation view of the production line of FIG. 2 according to embodiments of the present invention.
FIGs. 3A-3D illustrate schematic top plan views of images of a number of cans according to embodiments of the present invention.
FIG. 4 is a flowchart illustrating a process for determining a condition of an interior of a can according to embodiments of the present invention.
FIG. 5 is a block diagram of a computing system according to embodiments of the present invention.

Several of the figures are included as schematics. It is to be understood that the figures are for illustrative purposes, and are not to be considered of scale unless specifically stated to be of scale. Additionally, as schematics, the figures are provided to aid comprehension and may not include all aspects or information compared to realistic representations, and may include exaggerated material for illustrative purposes.

In the appended figures, similar components and/or features may have the same reference label. Further, various components of the same type may be distinguished by following the reference label by a letter that distinguishes among the similar components. If only the first reference label is used in the specification, the description is applicable to any one of the similar components having the same first reference label irrespective of the letter.

### DETAILED DESCRIPTION OF THE INVENTION

The ensuing description provides exemplary embodiments only, and is not intended to limit the scope, applicability, or configuration of the disclosure. Rather, the description of the exemplary embodiments will provide those skilled in the art with an enabling description for implementing one or more exemplary embodiments. It being understood that various changes may be made in the function and arrangement of elements without departing from the scope of the invention as set forth in the appended claims.

Embodiments of the present invention are directed to systems and methods for determining a condition of an interior of a can. For example, embodiments may determine whether an entire interior surface of a can has been fully treated with a protective lacquer and/or whether any foreign object and/or substances are present within the can prior to the can being palletized or filled with a particular beverage. Embodiments may verify the quality of the interior of a given can using one or more imaging and/or optical sensors that are arranged to monitor an interior of each can as the can proceeds down a production line. A number of light sources may illuminate the interior of each can with different wavelengths of light as the can is being imaged. Illuminating the interior while imaging the cans may enable different quality control standards to be verified. Defective and/or contaminated cans may be removed from the production line.

While described primarily in the context of beverage cans, it will be appreciated that the systems and methods described herein may be utilized in other manufacturing processes in which one or more protective coatings must cover a surface and/or in which the presence of foreign substances/objects needs to be monitored. Additionally, while described primarily in the context of performing quality control measures on cans prior to palletizing and/or filling operations, it will be appreciated that the techniques described herein may be implemented at other locations within a production line. The techniques described herein are not limited to beverage cans and may be utilized in other applications, such as other canning operations, bottling operations, and/or other operations involving detecting the presence of various substances.

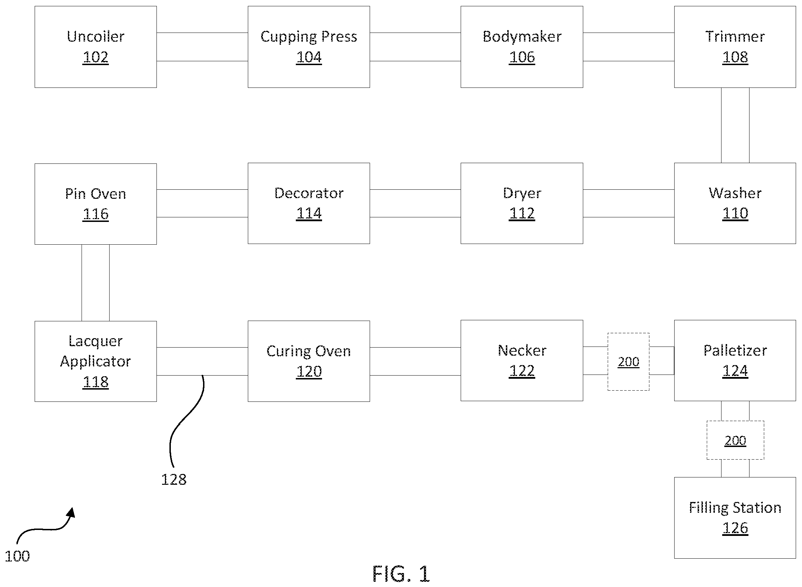

FIG. 1 illustrates a schematic view of a production line 100 for producing beverage cans, such as aluminum cans. Production line 100 will be described as including a number of different devices and is merely representative of one example of a production line. It will be appreciated that numerous variations may exist and that functionality described in relation to one or more devices may be combined and performed by a single device in some embodiments, while in other embodiments functionality attributed to a single device may be performed by a number of distinct devices. Additionally, some embodiments may include additional steps and/or omit one or more steps. Production line 100 may include an uncoiler 102 that lubricates sheet metal and feeds the lubricated sheet metal into a cupping press 104. The cupping press 104 may include a punch that punches out disc-shaped blanks from the sheet metal and subsequently forms the blanks into cup-shapes. For example, the flat disc-shaped blanks may be positioned between a drawing die and a blank holder. The drawing die may define a receptacle that is sized to be larger than a final diameter of the finished can. A punch may press a portion of the blank into the receptacle such that the blank is transformed into a cup-shape.

The cup-shaped blank may be transported to a bodymaker 106, which may form a general shape of the can. For example, the bodymaker 106 may position each cup-shaped blank over a re-drawing die, which may have a diameter that approximately matches a diameter of the finished can. A punch may press the cup-shaped blank through the re-drawing die, which increases the height of the blank while reducing a diameter of the blank to be approximately equal to that of the finished can. After re-drawing the blank, a number of ironing stages may be performed on each blank. For example, in some embodiments each can blank may be passed through three or more ironing stages. At each ironing stage, the blank may be positioned over an ironing die that defines a central aperture, with each successive ironing stage having an ironing die that has an inner diameter that is slightly smaller than the outer diameter of the can blank. At each stage, a punch may press the can blank through the ironing die, which causes the can blank to be stretched vertically, while keeping an inner diameter of the blank unchanged. The ironing process may be repeated any number of times until the can blank has a height that is greater than a final height of the finished can. Oftentimes, during the drawing, re-drawing, and/or ironing process, the bodymaker 106 may spray or otherwise supply a lubricating fluid to the can blank to lubricate and cool the can blank during formation of the can body. After ironing, the blank may be domed. For example, the can blank may be positioned over a doming tool that has a convex dome-shaped surface. A punch having a concave lower surface may press a bottom surface of the blank against the doming tool to form a dome-shaped indentation on the bottom of the blank. After the dome-shaped indention is formed, the blank may be transported to a trimmer 108. The trimmer 108 may trim and/or otherwise remove a top end of the blank such that the top end of the blank has a straight top edge and such that the can blank has a desired height.

After trimming, the blanks may be transported to a washer 110. A number of washing and/or etching operations may be performed on each blank to wash away lubricants from the bodymaker 106 and/or to prepare the surface of the can blank for printing. For example, in some embodiments, a six-stage cleaning process may be performed. In some embodiments, each can blank may be sprayed with two stages of an acid wash. For example, the acidic wash may include sulfuric acid (such as from 30% - 40% molar H₂SO₄) and/or other acid-based cleaning agents, which may etch and/or otherwise remove a thin layer of material from the surface of the can blank. Additional cleaning solutions may include, without limitation, Ridoline 740E, Ridoline 120SNF, Bonderite 404S, and/or Bonderite 77 produced by Henkel of Düsseldorf, Germany.

A number of water washes may be performed on each can blank after the acid wash stages. For example, deionized water may be sprayed and/or otherwise applied to the can blank to rinse away the other cleaning solutions. After washing, the can blanks may be transported to a dryer 112. The dryer 112 may include an oven, air jet, and/or other drying mechanism that may dry the can blanks prior to applying any decoration to the can blank.

The dried can blanks may be transported to a decorator 114, which may apply a decoration (such as a brand name, product name, nutrition information, etc.) to an outer surface of the can blank. The decorator 114 may apply any decoration to the outer surface of the can blank in one or more steps. For example, the decorator 114 may be an 8-color offset machine (or other number of colors) that may apply ink to the outer surface of the can blank using a rotation printing process to generate a desired decoration. After printing the decoration, the decorator 114 may apply an overprint varnish to protect the ink. A bottom of the can may be rim-coated, which may help facilitate rotation and/or other movement of the can blank along the production line. The decorated can blanks may be cured within a pin oven 116 to harden the ink and varnish.

The cured can blanks may be transported to a lacquer applicator 118. The lacquer applicator 118 may apply a food-grade lacquer to an interior surface of each can blank. This lacquer may help ensure that the final beverage and metal do not contact and/or react with one another. For example, the lacquer may prevent a beverage from eating through the metal, and may also prevent materials from the metal from leeching into and/or reacting with the beverage. The lacquer may be dried within a curing oven 120.

The can blanks may then be transported to a necker 122. The necker 122 may shape a top end of the can blank to form a neck. For example, a number of necking stages may gradually narrow the top end of the can blank to form the neck. Each necking stage may include an inner die that is inserted within the can blank and a necking die that is positioned outside the can blank. In each stage, the necking die has a slightly smaller inner diameter so as to slightly bend the top of the can inward to form the neck. In some instances, as many as 11 necking stages may be used to form the neck. Once the neck is formed, a top edge of the neck may be curved over to form a flange that may later be used in sealing the can. After the neck has been flanged, the cans may be transported to a palletizer 124, which may arrange the cans on pallets for transport to a filling facility and/or station 126.

The filling station 126 may be in a same facility as the rest of the production line 100 and/or may be located in a remote facility. For example, a manufacturer of the cans may provide the palletized cans to a bottler, which may fill and seal the cans for shipment to customers. At the filling station 126, each can may be filled with a beverage (or other substance) that corresponds to the decoration and/or other identifier (such as a barcode) that is printed on the can. After the cans are filled, a top, such as a lid having a stay-on tab, may be affixed to the flanged neck of the can. For example, edges of the lid and flanged neck may be crimped together, oftentimes with a sealant disposed therebetween to help seal the can. Prior to and/or during filling, the liquid may be pasteurized to kill bacteria within the can. This process may involve heating the liquid up to a temperature of at least 63 °C in some embodiments. In some embodiments, the pasteurization may include heating the liquid prior to dispensing the liquid into the cans. In other embodiments, once filled, the cans may be heated within a pasteurization oven to heat the liquid inside the cans to the necessary temperature. For example, heated water (such as water at 65 °C - 80 °C) may be sprayed on the filled cans to heat the contents of the can. After the cans have reached the necessary temperature, the cans may be cooled prior to palletization, such as by spraying the cans with cool water. This cooling may help prevent the formation of condensation on the outside of the cans, which may damage cardboard used in the palletization/packing process.

Transportation of the cans/blanks between the various devices may be performed by different conveyor mechanisms 128 throughout the manufacturing process. The mechanism chosen for a given stage may depend on a number of lines of cans entering and/or exiting a given device, a desired throughput, a desired orientation of the cans entering and/or exiting a given device, a current state of the cans entering and/or exiting a given device, and/or other factors. Possible conveyor mechanisms may include conveyor belts, vacuum conveyors (such as vacuum bridges), chain conveyors, roller conveyors, chute conveyors, vertical conveyors, wheel conveyors, pneumatic conveyors, and/or other conveyor mechanisms.

The production line 100 may include any number of quality control stations (not shown) positioned at one or more locations along the production line 100. The quality control stations may check for defects within the cans and ensure that each can meets a required quality control standard. The quality control stations may include one or more sensors (such as imaging sensors, scales, coating thickness gauges, enamel raters, tension meters, and the like) that may be used to determine whether individual cans meet the quality control standards. For example, the sensors may detect a wall thickness of the cans, a dome depth, can weight, proper diameters of the cans, a can height, presence of varnish and/or lacquer, quality of decoration (possibly including a barcode and/or other identifier), presence of a bottom rim coating, packaging quality, and the like. The quality control stations may be positioned after a given operation (e.g., checking a thickness of varnish and/or lacquer immediately after application/curing) and/or may be positioned at a later stage of the production line 100. For example, in some embodiments one or more quality control stations may be positioned just prior to the pa izer 124, such that the sensors may detect any defects that have occurred during production prior to the cans being loaded onto a pallet for shipment to a customer and/or filling. Similarly, one or more quality control stations may be positioned along the filling station 126 to ensure that the cans meet quality control standards prior to, during, and/or after filling of the can.

Production line 100 may include one or more removal mechanisms (not shown) that may be positioned at one or more points along the production line 100. The removal mechanisms may be used to remove defective and/or otherwise imperfect cans from the production line 100. For example, if one of the quality control stations determines that a given can or group of cans does not meet a predetermined quality control standard, a removal mechanism may remove the can or group of cans from the production line 100. In some instances, only those cans that have been determined to not meet quality control standard may be removed, while in other embodiments a section of cans proximate the defective can or cans may also be removed. The removal mechanisms may take many forms, such as air guns, vacuum bridges, mechanical arms, magnetic rejection system (for packaging materials that are ferromagnetic), and/or other known removal mechanisms.

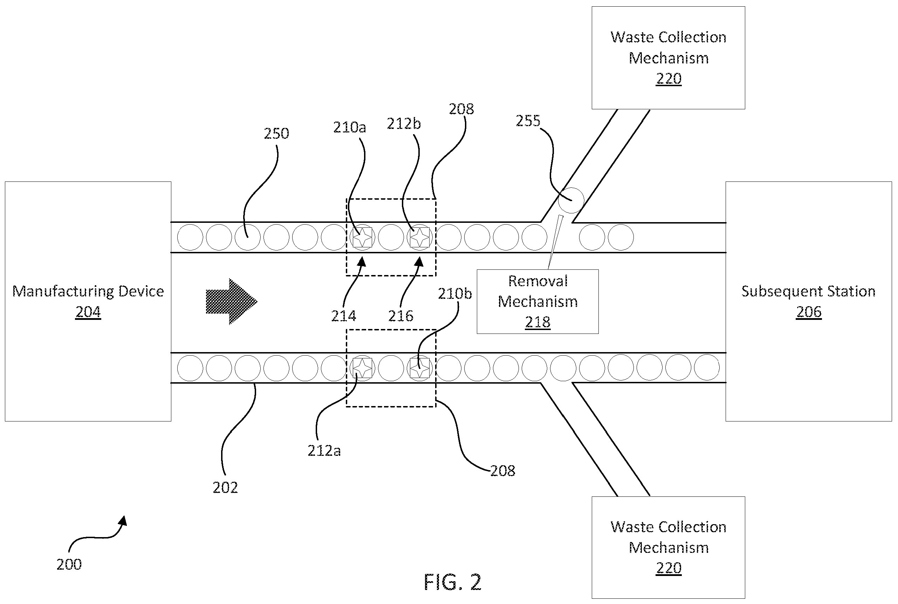

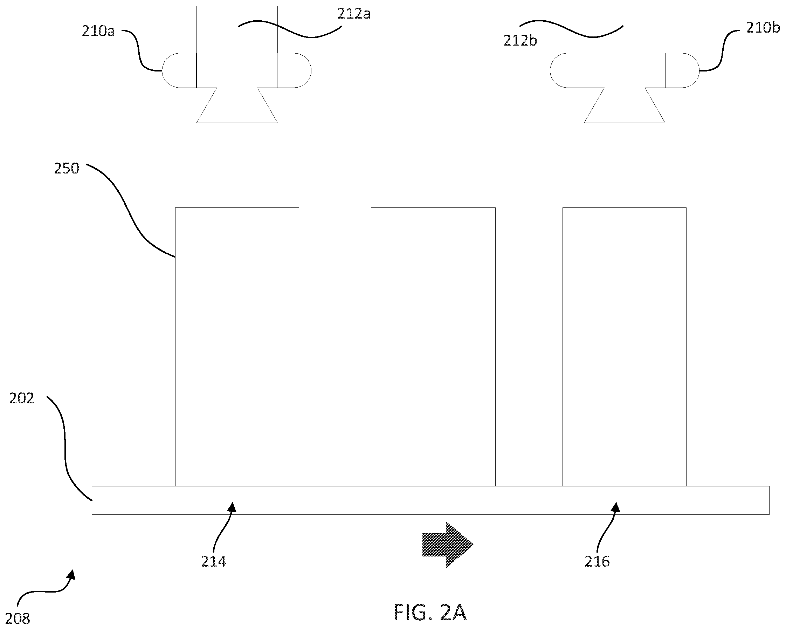

FIG. 2 illustrates a schematic partial top plan view of an exemplary production line 200 according to some embodiments of the present technology. FIG. 2 may illustrate further details relating to components in production line 100, such as for a quality control station. Production line 200 is understood to include any feature or aspect of production line 100 discussed previously in some embodiments. The production line 200 may be used to manufacture and/or fill cans 250 as previously described, as well as other products and objects. Production line 200 may show a partial view of the production line components being discussed and that may be incorporated in a larger manufacturing system. Any aspect of production line 200 may also be incorporated with other production lines or manufacturing systems as will be readily understood by the skilled artisan.

Production line 200 may include one or more conveyor mechanisms 202 that may transport a number of objects, such as beverage cans 250, down a portion of the production line 200. Each conveyor mechanism 202 may be positioned proximate an output of a manufacturing device 204 and may transport cans 250 from the manufacturing device 204 downstream to a subsequent station 206 of the production line 200. As just one example, the conveyor mechanism 202 may be positioned after the necker 122 (the manufacturing device 204) of production line 100 and may transport the formed cans 250 at least partway to the palletizer 124 (the subsequent station 206) as described above in relation to FIG. 1. In other embodiment, the conveyor mechanism 202 may be part of a filling station 126 and be positioned after an unloading mechanism (the manufacturing device 204) that unloads cans 250 from a pallet or other storage unit for transport to a filling nozzle of the filling station 126 (the subsequent station 206). The conveyor mechanism 202 may be any type of conveyor mechanism, such as but not limited to, a belt conveyor, a vacuum conveyor, or chain conveyor. In some embodiments, one or more conveyor mechanisms 202 may transport the cans 250 in one or more single file lines along at least a portion of a length of the conveyor mechanism 202. In the case of cans 250, the cans 250 may be positioned on the conveyor mechanism 202 with the domed-bottom end facing down in some embodiments.

Production line 200 may include a number of imaging stations 208, with each single file line of cans 250 including one or more imaging stations 208. Each imaging station 208 may include at least one light source 210 and at least one imaging sensor 212. For example, each imaging station 208 may include a light source 210a and a light source 210b. Each of the light sources 210 may be positioned to direct light into an interior of a can 250 when the respective can 250 is moved into alignment with the respective light source 210 by the conveyor mechanism 202. Light source 210a may emit light in a first range of wavelengths directed at a first position 214 of the conveyor mechanism 202, while light source 210b may emit light in a second range of wavelengths directed at a second position 216 of the conveyor mechanism 202. In some embodiments, the first range of wavelengths may include UV light (e.g., wavelengths between about 100 nm and 400 nm and may include UVA light, UVB light, UVC light, and/or combinations thereof) while the second range of wavelengths may include visible light (e.g., wavelengths between about 380 nm to 700 nm). While shown with the light source 210a being upstream of light source 210b, it will be appreciated that the order may be reversed in some embodiments. Additionally, embodiments are not limited to use of UV and visible light. Other wavelengths of light, such as infrared, x-ray, radio waves, and the light may be incorporated in various embodiments, which may detect the presence of other substances and materials, such as cleaning agents and/or contaminants. Each light source 210 may include a light element, such as a light emitting diode (LED), fluorescent light element, incandescent light element, and/or other light-emitting device. In other embodiments, the imaging sensors may include spectroscopy sensors.

Each imaging station 208 may include a camera (or other imaging sensor ) 212a and a camera 212b. Camera 212a may be directed at the first position 214 and may image an interior of a can 250 when the respective can 250 is moved to the first position 214 and while an interior of the can 250 is illuminated by light source 210a. Camera 212b may be directed at the first position 216 and may image an interior of a can 250 when the respective can 250 is moved to the first position 216 and while an interior of the can 250 is illuminated by light source 210b. In some embodiments, each light source 210 may be coupled with and/or formed as part of a respective one of the cameras 212. For example, the cameras 212 may include one or more light sources 210 (which may be mounted on and/or in a housing of the camera 212) that are oriented to focus light at a focal point of the respective camera 212. In a particular embodiment, a ring (or other arrangement) of light elements may encircle and/or otherwise be positioned proximate a lens of the camera 212. Such a configuration may help ensure that the light emitted from the light sources 210 may be directed into the interior of the can 250 at a substantially vertical angle (e.g., within 20 degrees or less, 10 degrees or less, or 5 degrees or less of vertical) so as to uniformly illuminate the interior of the can 250 without producing shadows. In other embodiments, the light sources 210 may be distinct components and may be positioned proximate the cameras 212 to uniformly illuminate the interior of the cans 250.

In some embodiments, the cameras 212 may be digital cameras that include charge-coupled device (CCD) and/or complementary metal-oxide-semiconductor (CMOS) sensors and/or may include other types of imaging sensors that may image the interior of cans 250. Typically, the cans 250 are imaged as the cans 250 are moving down the conveyor mechanism 202 without stopping the cans 250. Imaging the moving cans may help increase the throughput of cans 250 through the production line 200. The cameras 212 may capture images at regular intervals, such as at intervals that match a rate that the cans 250 pass the first position 214 and/or second position 216. In some embodiments, a video image may be continuously captured during a given production run. These imaging schemes may ensure that all cans 250 within the production run are imaged and analyzed.

As best illustrated in FIG. 2A, each light source 210 and camera 212 may be positioned above a portion of the conveyor mechanism 202 such that cans 250 moving along the conveyor mechanism 202 may be imaged from above using cameras 212. Camera 212a and camera 212b (and light sources 210a and 210b) may be spaced apart along a length of the conveyor mechanism 202. Such positioning may enable a first can 250 to be first imaged by camera 212a and then by camera 212b. While camera 212b images the first can 250, a second can 250 may be imaged by camera 212a.

In some embodiments, rather than including multiple cameras 212 in each imaging station 208, one or more of the imaging stations 208 may include a single camera 212. For example, the production line speed may be sufficiently high and/or the camera shutter/imaging speed may be sufficiently high that a single camera 212 may image each can 250 two or more times as the can 250 passes the imaging station 208. In this manner, a single camera 212 may be used to detect multiple light sources, with the camera 212 imaging each can while the can is sequentially illuminated with light within at least two different wavelength ranges. For example, the interior of the can 250 may be illuminated by light source 210a and imaged by the camera 212. Then the second light source 210b may illuminate the interior of the can 250 with light within a different range of wavelengths while the camera 212 images the interior of the can 250 a second time. The light sources 210a and 210b may be rapidly cycled on and off in an alternating pattern (with only one light source 210 on at a given time) at a rate that matches the shutter/imaging speed of the camera 212 to enable two images to be captured of each can 250. In some embodiments, the timing of the illumination of the light sources 210 may be synchronized with the capture of an image by the camera 212 (or multiple cameras when included)

Images from the cameras 212 may be analyzed to determine whether a state of the interior of the one can 250 matches an expected state based on an image from camera 212a and an image from camera 212b. For example, the imaging sensors 212 and/or other computing device may analyze the images to look for relatively uniform surfaces that are indicative of a fully coated interior that includes no foreign substances. In some embodiments, the analysis may include determining a brightness level, contrast level, color scale, and/or other optical characteristic of each can 250 and/or portion of a can 250. Values for each optical characteristic determined for a given can 250 may be compared against pre-established values or ranges of values for each of the optical characteristics. The pre-established values or ranges may vary based on a type of light used to illuminate the interior of the can 250. If the values match the pre-established values or ranges for a given type of light, the can 250 may be deemed to be acceptable. If values do not match the c for a given type of light, the can 250 may be deemed to be defective and may be removed from the production line 200.

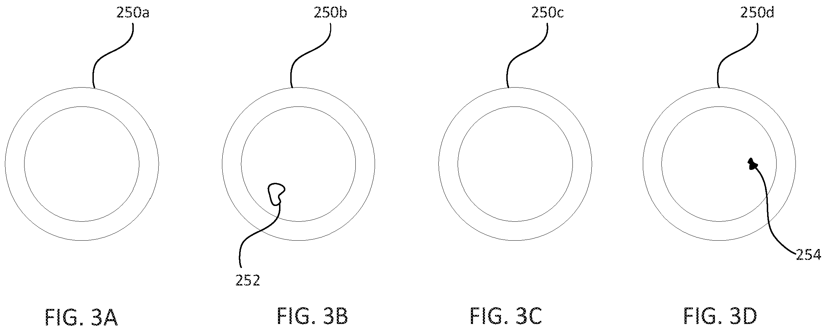

FIGs. 3A-3D illustrate view of images of cans 250 produced by cameras 212 of production line 200. As illustrated, each image depicts an inner surface of a respective can 250. FIG. 3A shows an image of an interior of a can 250a captured by camera 212a while the interior of the can 250 is illuminated using UV light emitted from light source 210a. UV light is unable to penetrate the lacquer used to protect the inner surface of the can 250. Therefore, when the lacquer is present, a substantially uniform surface is imaged. For an aluminum can 250, a uniform gray surface may be visible in the image. The inner surface of a clean, fully lacquered can 250 may exhibit pre-established optical characteristics (e.g., color, brightness, contrast, etc.) that fall within pre-established ranges of values based on the form of illumination used. These ranges of values may be quite narrow, as there are no surface imperfections, contaminates, and/or other defects. Due to the geometry of the can 250, the various optical characteristics may be different in different regions of the can 250 (e.g., different at walls vs. the dome-shaped base). To accommodate the can's geometry, the pre-established ranges of values may be associated with different regions of the can 250. For example, the side walls may be associated with a first set of pre-established ranges of values for one or more optical characteristics and the dome-shaped bottom may be associated with a second set of pre-established ranges of values for one or more optical characteristics. The optical characteristics in the first set and the second set may be the same or may be different.

FIG. 3B illustrates an image of the interior of a can 250b captured by camera 212a while the interior of the can 250b is illuminated using UV light emitted from light source 210a. Here, there is an area 252 that did not get completely coated by the lacquer. Without any lacquer present, the UV light is able to penetrate to the metallic surface, which may show up as a bright spot within the image. Software of the camera 212a and/or a computing device in communication with the camera 212a may analyze one or more optical characteristics of the can 250b across the inner surface of the can 250b and may compare these optical characteristics to the pre-established ranges of values for UV illumination. The camera 212a and/or computing device may determine that the can 250b has not been properly coated with lacquer.

FIG. 3C shows an image of an interior of a can 250c captured by camera 212b while the interior of the can 250c is illuminated using visible light emitted from light source 210b. Visible light may illuminate dents, scratches, bubbles, and/or contaminants (such as dust and grease) that are present within the can 250c. When no defects are present, as shown here, a substantially uniform surface is imaged. The inner surface of a satisfactory can 250c may exhibit predetermined optical characteristics (e.g., color, brightness, contrast, etc.) that fall within pre-established ranges of values based on the form of illumination used. These ranges of values may be quite narrow, as there are no surface imperfections, contaminates, and/or other defects. Due to the geometry of the can 250c, the various optical characteristics may be different in different regions of the can 250c (e.g., different at walls vs. the dome-shaped base). To accommodate the can's geometry, the pre-established ranges of values may be associated with different regions of the can 250c. For example, the side walls may be associated with a first set of pre-established ranges of values for one or more optical characteristics and the dome-shaped bottom may be associated with a second set of pre-established ranges of values for one or more optical characteristics. The optical characteristics in the first set and the second set may be the same or may be different.

FIG. 3D illustrates an image of the interior of a can 250d captured by camera 212b while the interior of the can 250d is illuminated using visible light emitted from light source 210b. Here, there is a contaminate 254 (such as grease or dust) that fell into the can 250d, which may appear as a different color, darkness, brightness, and/or contrast within the image. Software of the camera 212b and/or a computing device in communication with the camera 212b may analyze one or more optical characteristics of the can 250d across the inner surface of the can 250d and may compare these optical characteristics to the pre-established ranges of values for visible light illumination. The camera 212b and/or computing device may determine that the can 250d has been contaminated and/or is otherwise defective.

In some embodiments, rather than (or in addition to) comparing the measured optical characteristic values with predetermined ranges of values, the measured optical characteristic values may be compared across the pixels of the image to detect outliers. Constant values and/or gradual changes in values may indicate a satisfactory can, while significant shifts in values (e.g., outlier) from adjacent and/or nearby (e.g., within 10 pixels) may be indicative of a defective can 255 (e.g., voids in the lacquer and/or presence of contaminants).

Upon determining that the state of the interior of the one can 250 does not match the predetermined state (e.g., due to voids in the lacquer and/or presence of contaminants/deformities), the defective can 255 may be rejected. For example, a signal may be sent from the cameras 212 and/or other computing device that triggers actuation of a removal mechanism 218 shown in FIG. 2. Removal mechanism 218 may be positioned downstream of the imaging stations 208 and may physically remove the defective can 255 from the production line 200 and prevent the defective can 255 from reaching subsequent station 206. Removal mechanism 218 may be any device that is capable of removing one or more cans 250 from the production line 200, such as by diverting the cans 255 from a primary path of the conveyor mechanism 202. As just one example, the removal mechanism 218 may include a pneumatic blower that is configured to emit pressurized air to remove objects from the production line 200. For example, the pressurized air may push and/or otherwise divert defective cans 255 to a waste collection mechanism 220 (such as a bin, chute, and/or waste conveyor) off of the production line 200. Other removal mechanisms such as mechanical arms may be utilized in various embodiments. In some embodiments, once a defective can 255 has been detected, the signal may cause the removal mechanism 218 to remove all cans 250 for a predetermined duration until the defective can 255 has been diverted and/or otherwise removed from the production line 200. The predetermined duration may be selected based on a distance from an imaging position (e.g., the first position 214 or second position 216) to the removal mechanism 218 and a rate of speed of the conveyor mechanism 202 and may be sufficiently long to ensure that the defective can 255 has been diverted and/or otherwise removed from the production line 200. In other embodiments, the removal mechanism 218 may be designed to remove only those cans that have been detected as being defective. In such embodiments, the cameras 212 and/or computing device may determine an amount of time it will take any defective cans 255 to be transported from the imaging position to the removal mechanism 218. This amount of time may be based on a distance from the imaging position to the removal mechanism 218 and a rate of speed of the conveyor mechanism 202. The signal sent from the cameras 212 and/or computing device to the removal mechanism 218 may cause actuation of the removal mechanism 218 (such as expelling a short, controlled jet of air) after the amount of time has elapsed. In some embodiments, rather than using a time-based element to trigger the removal mechanism 218, one or more position and/or tracking sensors may be included that may monitor movement of any defective cans 255 and trigger actuation of the removal mechanism 218 when the defective can has reached the removal mechanism 218.

While disclosed with the imaging stations 208 including two cameras 212 having two different light sources 210, in some embodiments some or all of the imaging stations 208 may include only one camera 212 and/or one light source 210. For example, one imaging station 208 may be used to monitor the interior of cans 250 using visible light, while another imaging station 208 may be used to monitor the interior of cans 250 using UV light. In a particular embodiments, an imaging station 208 using UV light may be positioned after the curing oven, 120 to ensure that an interior of each can 250 is fully coated with lacquer and an imaging station 208 using visible light may be positioned after necker 122 to ensure that any contaminants are detected prior to palletization and/or filling.

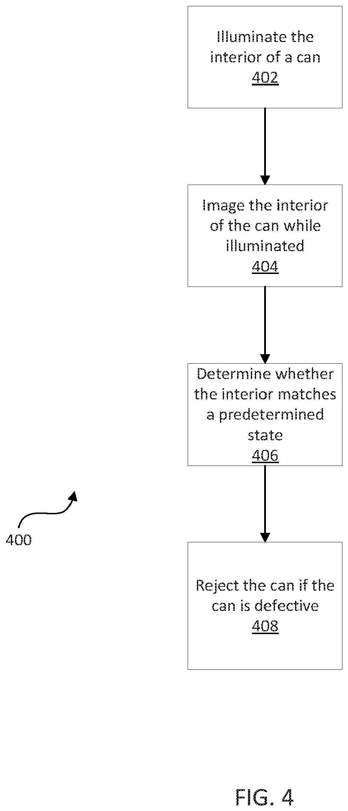

FIG. 4 is a flowchart illustrating a process 400 for determining a condition of an interior of a can. Process 400 may be performed by various devices of a production line, similar to production lines 100 and 200 described herein. For example, various functions of process 400 may be performed using a computing device, imaging sensors, light sources, conveyor mechanisms, and/or removal mechanisms. Process 400 may incorporate any of the functionality of such production lines in various embodiments. Process 400 may include a number of optional operations, which may or may not be specifically associated with some embodiments of methods according to the present technology.

Process 400 may begin at operation 402 by illuminating an interior of one can of a plurality of cans on a production line using at least one light source. The light sources may illuminate the interiors using UV light, visible light, IR light, and/or other light in various embodiments. For example, each can may be illuminated using a first light source that emits light within a first range of wavelengths and subsequently by a second light source that emits light within a second range of wavelengths. The first range of wavelengths may include ultraviolet light and the second range of wavelengths may include visible light, although the order of the light sources may be reversed in some embodiments.

At operation 404, the interior of the one can may be imaged while the interior is illuminated by the at least one light source. Typically, the interior of each can may be illuminated and imaged while the cans are moving down the conveyor mechanism, without stopping the cans during the imaging process. In a particular embodiment, imaging the interior may include capturing a first image of the interior of the one can while the interior of the one can is illuminated by the first light source and capturing a second image of the interior of the one can while the interior of the one can is illuminated by the second light source. The first image may be captured by a first camera and the second image may be captured by a second camera.

Process 400 may include determining whether a state of the interior of the one can matches a predetermined state based on one or both of the first image and the second image at operation 406. This determination may include comparing each image to a predetermined state that matches a desired result (e.g., fully lacquered inner surface and no foreign contaminants). The predetermined state of the interior of the one can may include a uniform surface appearance and may be associated with a threshold of uniformity of one or more visual characteristics of the inner surface of the can. For example, software may analyze the optical characteristics of the can across the inner surface of the can and may compare these optical characteristics to predetermined optical characteristics associated with a fully lacquered and contaminant free can. In some embodiments, the analysis may include determining a brightness level, contrast level, color scale, and/or other optical characteristic of each can and/or portion of a can. Values for each optical characteristic determined for a given can may be compared against pre-established values or ranges of values for each of the optical characteristics. A mismatch between the state of the interior of the one can and the predetermined state may be indicative of the presence of an undesired substance and/or a void in a lacquer coating applied to the interior of the one can. For example, an image of the can while illuminated with UV light may highlight any voids in the lacquer coating, which may appear as spots with different colors, brightness, and/or contrast values as compared to the coated portions of the walls. UV light may also highlight the presence of certain substances, such as machine oil and/or ink that may be transparent and may not be readily visible in an image captured under visible light. An image of the can while illuminated with visible light may highlight foreign particles, such as dirt and/or grease that may have fallen into the can during the manufacturing process.

At operation 408, process 400 may include rejecting the one can if the state of the interior of the one can does not match the predetermined state. The can may be rejected if one or both of the first image and the second image does not meet the predetermined state. For example, a removal mechanism may be triggered that diverts and/or otherwise removes the defective can from the production line for inspection and/or recycling. As just one example, the removal mechanism may include a pneumatic blower that emits pressurized air to divert objects into a waste collection area of the production line 200.

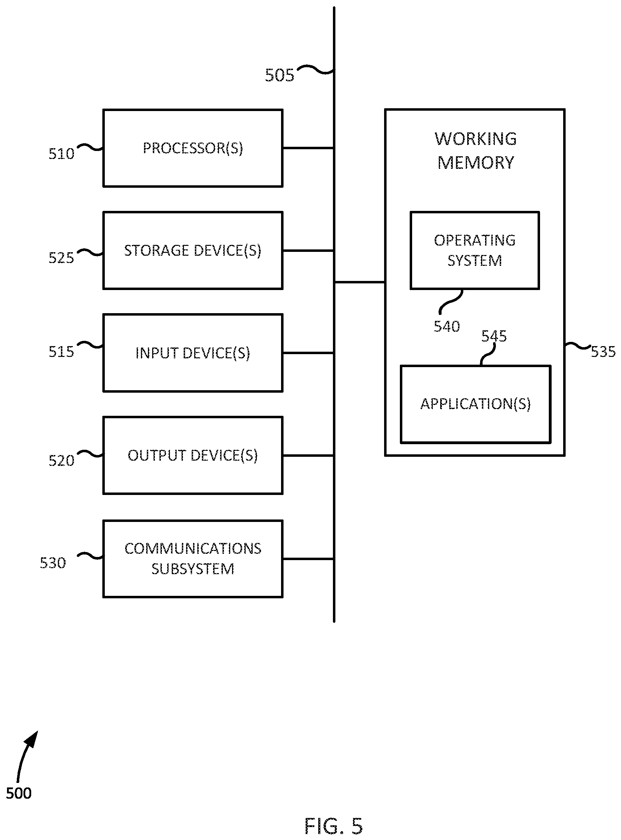

A computer system as illustrated in FIG. 5 may be incorporated as part of the previously described computerized devices. For example, computer system 500 can represent some of the components of computing devices, such as conveyor mechanisms, imaging sensors 212, removal devices, and/or other computing devices described herein. FIG. 5 provides a schematic illustration of one embodiment of a computer system 500 that can perform the methods provided by various other embodiments, as described herein. FIG. 5 is meant only to provide a generalized illustration of various components, any or all of which may be utilized as appropriate. FIG. 5, therefore, broadly illustrates how individual system elements may be implemented in a relatively separated or relatively more integrated manner.

The computer system 500 is shown comprising hardware elements that can be electrically coupled via a bus 505 (or may otherwise be in communication, as appropriate). The hardware elements may include a processing unit 510, including without limitation one or more processors, such as one or more central processing units (CPUs), graphical processing units (GPUs), special-purpose processors (such as digital signal processing chips, graphics acceleration processors, and/or the like); one or more input devices 515, which can include without limitation a keyboard, a touchscreen, receiver, a motion sensor, a camera, a smartcard reader, a contactless media reader, and/or the like; and one or more output devices 520, which can include without limitation a display device, a speaker, a printer, a writing module, and/or the like.

The computer system 500 may further include (and/or be in communication with) one or more non-transitory storage devices 525, which can comprise, without limitation, local and/or network accessible storage, and/or can include, without limitation, a disk drive, a drive array, an optical storage device, a solid-state storage device such as a random access memory ("RAM") and/or a read-only memory ("ROM"), which can be programmable, flash-updateable and/or the like. Such storage devices may be configured to implement any appropriate data stores, including without limitation, various file systems, database structures, and/or the like.

The computer system 500 might also include a communication interface 530, which can include without limitation a modem, a network card (wireless or wired), an infrared communication device, a wireless communication device and/or chipset (such as a Bluetooth^{™} device, an 502.11 device, a Wi-Fi device, a VMAX device, an NFC device, cellular communication facilities, etc.), and/or similar communication interfaces. The communication interface 530 may permit data to be exchanged with a network (such as the network described below, to name one example), other computer systems, and/or any other devices described herein. In many embodiments, the computer system 500 will further comprise a non-transitory working memory 535, which can include a RAM or ROM device, as described above.

The computer system 500 also can comprise software elements, shown as being currently located within the working memory 535, including an operating system 540, device drivers, executable libraries, and/or other code, such as one or more application programs 545, which may comprise computer programs provided by various embodiments, and/or may be designed to implement methods, and/or configure systems, provided by other embodiments, as described herein. Merely by way of example, one or more procedures described with respect to the method(s) discussed above might be implemented as code and/or instructions executable by a computer (and/or a processor within a computer); in an aspect, then, such special/specific purpose code and/or instructions can be used to configure and/or adapt a computing device to a special purpose computer that is configured to perform one or more operations in accordance with the described methods.

A set of these instructions and/or code might be stored on a computer-readable storage medium, such as the storage device(s) 525 described above. In some cases, the storage medium might be incorporated within a computer system, such as computer system 500. In other embodiments, the storage medium might be separate from a computer system (e.g., a removable medium, such as a compact disc), and/or provided in an installation package, such that the storage medium can be used to program, configure and/or adapt a special purpose computer with the instructions/code stored thereon. These instructions might take the form of executable code, which is executable by the computer system 500 and/or might take the form of source and/or installable code, which, upon compilation and/or installation on the computer system 500 (e.g., using any of a variety of available compilers, installation programs, compression/decompression utilities, etc.) then takes the form of executable code.

Substantial variations may be made in accordance with specific requirements. For example, customized hardware might also be used, and/or particular elements might be implemented in hardware, software (including portable software, such as applets, etc.), or both. Moreover, hardware and/or software components that provide certain functionality can comprise a dedicated system (having specialized components) or may be part of a more generic system. For example, a risk management engine configured to provide some or all of the features described herein relating to the risk profiling and/or distribution can comprise hardware and/or software that is specialized (e.g., an application-specific integrated circuit (ASIC), a software method, etc.) or generic (e.g., processing unit 510, applications 545, etc.) Further, connection to other computing devices such as network input/output devices may be employed.

Some embodiments may employ a computer system (such as the computer system 500) to perform functions and methods in accordance with the disclosure. For example, some or all of the procedures of the described methods and/or functionality associated with one or more of the devices described herein may be performed by the computer system 500 in response to processing unit 510 executing one or more sequences of one or more instructions (which might be incorporated into the operating system 540 and/or other code, such as an application program 545) contained in the working memory 535. Such instructions may be read into the working memory 535 from another computer-readable medium, such as one or more of the storage device(s) 525. Merely by way of example, execution of the sequences of instructions contained in the working memory 535 might cause the processing unit 510 to perform one or more procedures of the methods described herein. Each device described herein (imaging sensor, conveyor mechanism, removal mechanism, other computing device, etc.) may include and/or be coupled with a processing unit 510 that may perform and/or cause the performance of any of the functionality attributed to that device. For example, one or more processing units 510 may determine whether a state of the interior of the one can matches a predetermined state by comparing optical characteristics of a can to predetermined optical characteristics associated with a fully lacquered and contaminant free can and/or send a signal to an object removal mechanism that causes the object removal mechanism to remove the one object from the production line. Additional functionality may be performed by one or more processing units 510 in various embodiments.

The terms "machine-readable medium" and "computer-readable medium," as used herein, refer to any medium that participates in providing data that causes a machine to operate in a specific fashion. In an embodiment implemented using the computer system 500, various computer-readable media might be involved in providing instructions/code to processing unit 510 for execution and/or might be used to store and/or carry such instructions/code (e.g., as signals). In many implementations, a computer-readable medium is a physical and/or tangible storage medium. Such a medium may take many forms, including but not limited to, non-volatile media, volatile media, and transmission media. Non-volatile media include, for example, optical and/or magnetic disks, such as the storage device(s) 525. Volatile media include, without limitation, dynamic memory, such as the working memory 535. Transmission media include, without limitation, coaxial cables, copper wire, and fiber optics, including the wires that comprise the bus 505, as well as the various components of the communication interface 530 (and/or the media by which the communication interface 530 provides communication with other devices). Hence, transmission media can also take the form of waves (including without limitation radio, acoustic and/or light waves, such as those generated during radio-wave and infrared data communications).

Common forms of physical and/or tangible computer-readable media include, for example, a magnetic medium, optical medium, or any other physical medium with patterns of holes, a RAM, a PROM, EPROM, a FLASH-EPROM, any other memory chip or cartridge, a carrier wave as described hereinafter, or any other medium from which a computer can read instructions and/or code.

The communication interface 530 (and/or components thereof) generally will receive the signals, and the bus 505 then might carry the signals (and/or the data, instructions, etc. carried by the signals) to the working memory 535, from which the processor(s) 510 retrieves and executes the instructions. The instructions received by the working memory 535 may optionally be stored on a non-transitory storage device 525 either before or after execution by the processing unit 510.

In the embodiments described above, for the purposes of illustration, processes may have been described in a particular order. It should be appreciated that in alternate embodiments, the methods may be performed in a different order than that described. It should also be appreciated that the methods and/or system components described above may be performed by hardware and/or software components (including integrated circuits, processing units, and the like), or may be embodied in sequences of machine-readable, or computer-readable, instructions, which may be used to cause a machine, such as a general-purpose or special-purpose processor or logic circuits programmed with the instructions to perform the methods. These machine-readable instructions may be stored on one or more machine-readable mediums, such as CD-ROMs or other type of optical disks, floppy disks, ROMs, RAMs, EPROMs, EEPROMs, magnetic or optical cards, flash memory, or other types of machine-readable mediums suitable for storing electronic instructions. Alternatively, the methods may be performed by a combination of hardware and software.

The methods, systems, devices, graphs, and tables discussed herein are examples. Various configurations may omit, substitute, or add various procedures or components as appropriate. For instance, in alternative configurations, the methods may be performed in an order different from that described, and/or various stages may be added, omitted, and/or combined. Also, features described with respect to certain configurations may be combined in various other configurations. Different aspects and elements of the configurations may be combined in a similar manner. Also, technology evolves and, thus, many of the elements are examples and do not limit the scope of the disclosure or claims. Additionally, the techniques discussed herein may provide differing results with different types of context awareness classifiers.

While illustrative and presently preferred embodiments of the disclosed systems, methods, and machine-readable media have been described in detail herein, it is to be understood that the inventive concepts may be otherwise variously embodied and employed, and that the appended claims are intended to be construed to include such variations, except as limited by the prior art.

Unless defined otherwise, all technical and scientific terms used herein have the same meaning as commonly or conventionally understood. As used herein, the articles "a" and "an" refer to one or to more than one (i.e., to at least one) of the grammatical object of the article. By way of example, "an element" means one element or more than one element. "About" and/or "approximately" as used herein when referring to a measurable value such as an amount, a temporal duration, and the like, encompasses variations of ±20% or ±10%, ±5%, or +0.1% from the specified value, as such variations are appropriate to in the context of the systems, devices, circuits, methods, and other implementations described herein. "Substantially" as used herein when referring to a measurable value such as an amount, a temporal duration, a physical attribute (such as frequency), and the like, also encompasses variations of ±20% or ±10%, ±5%, or +0.1% from the specified value, as such variations are appropriate to in the context of the systems, devices, circuits, methods, and other implementations described herein.

As used herein, including in the claims, "and" as used in a list of items prefaced by "at least one of" or "one or more of" indicates that any combination of the listed items may be used. For example, a list of "at least one of A, B, and C" includes any of the combinations A or B or C or AB or AC or BC and/or ABC (i.e., A and B and C). Furthermore, to the extent more than one occurrence or use of the items A, B, or C is possible, multiple uses of A, B, and/or C may form part of the contemplated combinations. For example, a list of "at least one of A, B, and C" may also include AA, AAB, AAA, BB, etc.

## Claims

1. A method of determining a condition of an interior of a can (250), comprising:
illuminating an interior of one can (250) of a plurality of cans (250) on a production line (100, 200) using a UV light source (210a), that emits light having wavelength of between 100 nm and 400 nm;
capturing a first image of the interior of the one can (250) while the interior of the one can (250) is illuminated by the UV light source (210a);
illuminating the interior of the one can on the production line using a visible light source (210b) that emits light having wavelengths of between 380 nm and 700 nm
capturing a second image of the interior of the one can (250) while the interior is illuminated by the visible light source (210b); and
determining whether a state of the interior of the one can (250) matches a predetermined state based on the first and second images of the interior of the can (250), wherein the predetermined state comprises a uniform surface appearance.

2. The method according to claim 1, wherein the determining whether a state of the interior of the one can (250) matches a predetermined state comprises determining that predetermined optical characteristics fall within pre-established ranges of values based on the form of illumination used.

3. The method of determining a condition of an interior of a can (250) of claims 1 to 2, further comprising:
rejecting the one can (250) upon determining that the state of the interior of the one can (250) does not match the predetermined state.

4. The method of determining a condition of an interior of a can (250) of any one of claims 1 to 3, wherein:
illuminating an interior of one can (250) and imaging the interior of the one can (250) are performed while the one can (250) is moving down the production line (100, 200).

5. A production line (100, 200), comprising:
a conveyor mechanism (202) that is configured to transport a plurality of cans (250) down a portion of the production line (100, 200);
a first light source (210a) that emits UV light in a first range of having wavelengths of between 100 nm and 400 nm at a first position of the conveyor mechanism (202);
a first camera (212a) directed toward the first position (214);
a second light source (210b) that emits visible light in a second range of having wavelengths of between 380 nm and 700 nm at a second position of the conveyor mechanism;
a second camera (212b) directed toward the second position (216); one or more processors (510); and
a memory having instructions stored thereon that, when executed, cause the one or more processors (510) to:
illuminate an interior of one can (250) of the plurality of cans (250) using the first light source (210a);
capture a first image of the interior of the one can (250) using the first camera (212a) while the interior of the one can (250) is illuminated by the first light source (210a);
illuminate the interior of the one can (250) using the second light source (210b);
capture a second image of the interior of the one can (250) using the second camera (212b) while the interior of the one can (250) is illuminated by the second light source (210b); and
determine whether a state of the interior of the one can (250) matches a predetermined state based on the first image and the second image, wherein the predetermined state comprises a uniform surface appearance.

6. The production line (100, 200) of claim 5, further comprising:
a removal mechanism (218) configured to remove the one can (250) upon determining that the state of the interior of the one can (250) does not match the predetermined state.

7. The production line (100, 200) of one of claims 5 or 6, wherein:
the first light source (210a) is coupled with the first camera (212a); and
the second light source (210b) is coupled with the second camera (212b).

8. The production line (100, 200) of any one of claims 5 to 7, wherein:
the first position (214) is positioned upstream of the second position (216).

9. The production line (100, 200) of any one of claims 5 to 8, wherein:
the first light source (210a) and the second light source (210b) are positioned above the conveyor mechanism (202).

10. The production line (100, 200) of any one of claims 5 to 9, wherein:
the first camera is positioned to image an additional can of the plurality of cans (250) while the second camera images the one can.

11. The production line (100, 200) of any one of claims 5 to 10, further comprising:
a necker (122) that is configured to shape a neck of each of the plurality of cans (250), wherein the conveyor mechanism (202) is configured to transport the plurality of cans (250) from the necker (122) at least partially to a subsequent station of the production line (100, 200)

12. The production line of claim 11, wherein:
the subsequent station comprises a palletizer.

13. The production line (100, 200) of any one of claims 7 to 12, further comprising:
an unloading mechanism that is configured to transfer the plurality of cans (250) from a pallet to the conveyor mechanism (202).

14. The production line of claim 13, further comprising:
a filling station that is configured to receive acceptable cans of the plurality of cans from the conveyor mechanism.

## Patentansprüche

1. Ein Verfahren zum Bestimmen eines Zustands des Inneren einer Dose (250), umfassend:
Beleuchten des Inneren einer Dose (250) aus einer Vielzahl von Dosen (250) auf einer Produktionslinie (100, 200) unter Verwendung einer UV-Lichtquelle (210a), die Licht mit einer Wellenlänge zwischen 100 nm und 400 nm emittiert;
Aufnehmen eines ersten Bildes des Inneren der Dose (250), während das Innere der Dose (250) durch die UV-Lichtquelle (210a) beleuchtet wird;
Beleuchten des Inneren der Dose auf der Produktionslinie unter Verwendung einer sichtbaren Lichtquelle (210b), die Licht mit Wellenlängen zwischen 380 nm und 700 nm emittiert
Aufnehmen eines zweiten Bildes des Inneren der Dose (250), während das Innere durch die sichtbare Lichtquelle (210b) beleuchtet wird; und
Bestimmen, ob ein Zustand des Inneren der Dose (250) mit einem vorbestimmten Zustand übereinstimmt, auf der Grundlage des ersten und des zweiten Bildes des Inneren der Dose (250), wobei der vorbestimmte Zustand ein gleichmäßiges Oberflächenerscheinungsbild umfasst.

2. Das Verfahren nach Anspruch 1, wobei das Bestimmen, ob ein Zustand des Inneren der Dose (250) mit einem vorbestimmten Zustand übereinstimmt, das Bestimmen umfasst, dass vorbestimmte optische Eigenschaften innerhalb vorab festgelegter Wertebereiche liegen, auf der Grundlage der verwendeten Beleuchtungsart.

3. Das Verfahren zum Bestimmen eines Zustands des Inneren einer Dose (250) nach den Ansprüchen 1 bis 2, ferner umfassend:
Aussortieren der Dose (250), wenn bestimmt wird, dass der Zustand des Inneren der Dose (250) nicht mit dem vorbestimmten Zustand übereinstimmt.

4. Das Verfahren zum Bestimmen eines Zustands des Inneren einer Dose (250) nach einem der Ansprüche 1 bis 3, wobei:
das Beleuchten des Inneren einer Dose (250) und das Abbilden des Inneren der Dose (250) durchgeführt werden, während sich die Dose (250) entlang der Produktionslinie (100, 200) bewegt.

5. Eine Produktionslinie (100, 200), umfassend:
einen Fördermechanismus (202), der dazu konfiguriert ist, eine Vielzahl von Dosen (250) entlang eines Abschnitts der Produktionslinie (100, 200) zu transportieren;
eine erste Lichtquelle (210a), die UV-Licht in einem ersten Bereich mit Wellenlängen zwischen 100 nm und 400 nm an einer ersten Position des Fördermechanismus (202) emittiert;
eine erste Kamera (212a), die auf die erste Position (214) gerichtet ist;
eine zweite Lichtquelle (210b), die sichtbares Licht in einem zweiten Bereich mit Wellenlängen zwischen 380 nm und 700 nm an einer zweiten Position des Fördermechanismus emittiert;
eine zweite Kamera (212b), die auf die zweite Position (216) gerichtet ist; einen oder mehrere Prozessoren (510); und
einen Speicher, auf dem Anweisungen gespeichert sind, die bei ihrer Ausführung den einen oder die mehreren Prozessoren (510) veranlassen:
das Innere einer Dose (250) aus der Vielzahl von Dosen (250) unter Verwendung der ersten Lichtquelle (210a) zu beleuchten;
ein erstes Bild des Inneren der Dose (250) unter Verwendung der ersten Kamera (212a) aufzunehmen, während das Innere der Dose (250) durch die erste Lichtquelle (210a) beleuchtet wird;
das Innere der Dose (250) unter Verwendung der zweiten Lichtquelle (210b) zu beleuchten;
ein zweites Bild des Inneren der Dose (250) unter Verwendung der zweiten Kamera (212b) aufzunehmen, während das Innere der Dose (250) durch die zweite Lichtquelle (210b) beleuchtet wird; und
zu bestimmen, ob ein Zustand des Inneren der Dose (250) mit einem vorbestimmten Zustand übereinstimmt, auf der Grundlage des ersten Bildes und des zweiten Bildes, wobei der vorbestimmte Zustand ein gleichmäßiges Oberflächenerscheinungsbild umfasst.

6. Die Produktionslinie (100, 200) nach Anspruch 5, ferner umfassend:
einen Entfernungsmechanismus (218), der dazu konfiguriert ist, die Dose (250) zu entfernen, wenn bestimmt wird, dass der Zustand des Inneren der Dose (250) nicht mit dem vorbestimmten Zustand übereinstimmt.

7. Die Produktionslinie (100, 200) nach einem der Ansprüche 5 oder 6, wobei:
die erste Lichtquelle (210a) mit der ersten Kamera (212a) gekoppelt ist; und
die zweite Lichtquelle (210b) mit der zweiten Kamera (212b) gekoppelt ist.

8. Die Produktionslinie (100, 200) nach einem der Ansprüche 5 bis 7, wobei:
die erste Position (214) stromaufwärts von der zweiten Position (216) positioniert ist.

9. Die Produktionslinie (100, 200) nach einem der Ansprüche 5 bis 8, wobei:
die erste Lichtquelle (210a) und die zweite Lichtquelle (210b) über dem Fördermechanismus (202) positioniert sind.

10. Die Produktionslinie (100, 200) nach einem der Ansprüche 5 bis 9, wobei:
die erste Kamera so positioniert ist, dass sie eine zusätzliche Dose aus der Vielzahl von Dosen (250) abbildet, während die zweite Kamera die Dose abbildet.

11. Die Produktionslinie (100, 200) nach einem der Ansprüche 5 bis 10, ferner umfassend:
eine Halseinziehmaschine (122), die dazu konfiguriert ist, einen Hals jeder der Vielzahl von Dosen (250) zu formen, wobei der Fördermechanismus (202) dazu konfiguriert ist, die Vielzahl von Dosen (250) von der Halseinziehmaschine (122) zumindest teilweise zu einer nachfolgenden Station der Produktionslinie (100, 200) zu transportieren

12. Die Produktionslinie nach Anspruch 11, wobei:
die nachfolgende Station einen Palettierer umfasst.

13. Die Produktionslinie (100, 200) nach einem der Ansprüche 7 bis 12, ferner umfassend:
einen Entlademechanismus, der dazu konfiguriert ist, die Vielzahl von Dosen (250) von einer Palette zu dem Fördermechanismus (202) zu übertragen.

14. Die Produktionslinie nach Anspruch 13, ferner umfassend:
eine Füllstation, die dazu konfiguriert ist, akzeptable Dosen aus der Vielzahl von Dosen von dem Fördermechanismus zu empfangen.

## Revendications

1. Un procédé pour déterminer un état de l'intérieur d'une boîte (250), comprenant :
éclairer l'intérieur d'une boîte (250) parmi une pluralité de boîtes (250) sur une ligne de production (100, 200) à l'aide d'une source de lumière UV (210a), qui émet une lumière ayant une longueur d'onde comprise entre 100 nm et 400 nm ;
capturer une première image de l'intérieur de la boîte (250) alors que l'intérieur de la boîte (250) est éclairé par la source de lumière UV (210a) ;
éclairer l'intérieur de la boîte sur la ligne de production à l'aide d'une source de lumière visible (210b) qui émet une lumière ayant des longueurs d'onde comprises entre 380 nm et 700 nm
capturer une deuxième image de l'intérieur de la boîte (250) alors que l'intérieur est éclairé par la source de lumière visible (210b) ; et
déterminer si un état de l'intérieur de la boîte (250) correspond à un état prédéterminé sur la base des première et deuxième images de l'intérieur de la boîte (250), dans lequel l'état prédéterminé comprend un aspect de surface uniforme.

2. Le procédé selon la revendication 1, dans lequel le fait de déterminer si un état de l'intérieur de la boîte (250) correspond à un état prédéterminé comprend le fait de déterminer que des caractéristiques optiques prédéterminées se situent dans des plages de valeurs préétablies sur la base de la forme d'éclairage utilisée.

3. Le procédé pour déterminer un état de l'intérieur d'une boîte (250) des revendications 1 à 2, comprenant en outre :
rejeter la boîte (250) lorsqu'il est déterminé que l'état de l'intérieur de la boîte (250) ne correspond pas à l'état prédéterminé.

4. Le procédé pour déterminer un état de l'intérieur d'une boîte (250) selon l'une quelconque des revendications 1 à 3, dans lequel :
l'éclairage de l'intérieur d'une boîte (250) et la réalisation d'une image de l'intérieur de la boîte (250) sont effectués pendant que la boîte (250) se déplace le long de la ligne de production (100, 200).

5. Une ligne de production (100, 200), comprenant :
un mécanisme de convoyeur (202) qui est configuré pour transporter une pluralité de boîtes (250) le long d'une partie de la ligne de production (100, 200) ;
une première source de lumière (210a) qui émet une lumière UV dans une première plage ayant des longueurs d'onde comprises entre 100 nm et 400 nm à une première position du mécanisme de convoyeur (202) ;
une première caméra (212a) dirigée vers la première position (214) ;
une deuxième source de lumière (210b) qui émet une lumière visible dans une deuxième plage ayant des longueurs d'onde comprises entre 380 nm et 700 nm à une deuxième position du mécanisme de convoyeur ;
une deuxième caméra (212b) dirigée vers la deuxième position (216) ; un ou plusieurs processeurs (510) ; et
une mémoire sur laquelle sont stockées des instructions qui, lorsqu'elles sont exécutées, amènent le ou les processeurs (510) à :
éclairer l'intérieur d'une boîte (250) de la pluralité de boîtes (250) à l'aide de la première source de lumière (210a) ;
capturer une première image de l'intérieur de la boîte (250) à l'aide de la première caméra (212a) alors que l'intérieur de la boîte (250) est éclairé par la première source de lumière (210a) ;
éclairer l'intérieur de la boîte (250) à l'aide de la deuxième source de lumière (210b) ;
capturer une deuxième image de l'intérieur de la boîte (250) à l'aide de la deuxième caméra (212b) alors que l'intérieur de la boîte (250) est éclairé par la deuxième source de lumière (210b) ; et
déterminer si un état de l'intérieur de la boîte (250) correspond à un état prédéterminé sur la base de la première image et de la deuxième image, dans lequel l'état prédéterminé comprend un aspect de surface uniforme.

6. La ligne de production (100, 200) selon la revendication 5, comprenant en outre :
un mécanisme de retrait (218) configuré pour retirer la boîte (250) lorsqu'il est déterminé que l'état de l'intérieur de la boîte (250) ne correspond pas à l'état prédéterminé.

7. La ligne de production (100, 200) selon l'une des revendications 5 ou 6, dans laquelle :
la première source de lumière (210a) est couplée à la première caméra (212a) ; et
la deuxième source de lumière (210b) est couplée à la deuxième caméra (212b).

8. La ligne de production (100, 200) selon l'une quelconque des revendications 5 à 7, dans laquelle :
la première position (214) est positionnée en amont de la deuxième position (216).

9. La ligne de production (100, 200) selon l'une quelconque des revendications 5 à 8, dans laquelle :
la première source de lumière (210a) et la deuxième source de lumière (210b) sont positionnées au-dessus du mécanisme de convoyeur (202).

10. La ligne de production (100, 200) selon l'une quelconque des revendications 5 à 9, dans laquelle :
la première caméra est positionnée de manière à former une image d'une boîte supplémentaire de la pluralité de boîtes (250) pendant que la deuxième caméra forme une image de la boîte.

11. La ligne de production (100, 200) selon l'une quelconque des revendications 5 à 10, comprenant en outre :
une machine de rétreint (122) qui est configurée pour façonner un col de chacune de la pluralité de boîtes (250), dans laquelle le mécanisme de convoyeur (202) est configuré pour transporter la pluralité de boîtes (250) depuis la machine de rétreint (122) au moins partiellement jusqu'à une station suivante de la ligne de production (100, 200)

12. La ligne de production selon la revendication 11, dans laquelle :
la station suivante comprend un palettiseur.

13. La ligne de production (100, 200) selon l'une quelconque des revendications 7 à 12, comprenant en outre :
un mécanisme de déchargement qui est configuré pour transférer la pluralité de boîtes (250) d'une palette au mécanisme de convoyeur (202).

14. La ligne de production selon la revendication 13, comprenant en outre :
une station de remplissage qui est configurée pour recevoir des boîtes acceptables de la pluralité de boîtes depuis le mécanisme de convoyeur.
